# EUROPÄISCHE PATENTANMELDUNG

(11) **EP 1 040 742 A1**
(43) Veröffentlichungstag der Anmeldung: **04.10.2000**
(21) Anmeldenummer: 00106744.6
(22) Anmeldetag: 29.03.2000
(51) Int. Cl.: A01B 45/02, B25B 27/02, F16B 37/04

(54) **Werkzeughalterung einer Bodenbearbeitungsmaschine**

(30) Priorität: 29.03.1999 DE 29905768 U
(71) Anmelder: Wiedenmann GmbH, 89192 Rammingen (DE)
(72) Erfinder:
(74) Vertreter: Flügel, Otto, Dipl.-Ing.

(57) **Zusammenfassung**

Die Erfindung betrifft eine Werkzeughalterung einer Badenbearbeitungsmaschine für das Einbringen von Öffnungen in den Boden mittels wenigstens eines in den Boden einzustoßenden Zinkens (2), der an seinem der Einstoßrichtung abgewandten Ende in einen Zinkenträger (1) fest verschraubt eingespannt und aus dieser Einspannlage zum Zwecke der Auswechslung lösbar ist, welche Einspannung mit dem Ziel einer einfachen und raumsparenden sowie besonders zuverlässig, schnell und bequem handhabbaren, lösbaren und gleichwohl besonders spielarmen und festen Verbindung zwischen den Zinken und den Zinkenträgern derart gestaltet ist, dass das dem Einstoßende (3) abgewandte Gewindeende (5) in ein entsprechendes Gegengewinde (6) einer Gewindemuffe (4) einschraubbar ist, die ihrerseits über eine koaxiale Gewindeverbindung (7, 8) in den Zinkenträger (1) eingreift, derart, dass die durch diese Gewinde bei Drehen der Gewindemuffe (4) auf den Zinken (2) ausgeübte axiale Versetzung größer ist als die axiale Versetzung der Gewindemuffe (4) gegenüber dem Zinkenträger (1) und/oder zu dieser entgegengerichtet ist.

## Beschreibung

Die Erfindung betrifft eine Werkzeughalterung einer Bodenbearbeitungsmaschine für das Einbringen von Öffnungen in den Boden mittels wenigstens eines in den Boden einzustoßenden Zinkens, der an seinem der Einstoßrichtung abgewandten Ende in einen Zinkenträger fest verschraubt eingespannt und aus dieser Einspannlage zum Zwecke der Auswechslung lösbar ist.

Bodenbearbeitungsmaschinen der hier in Rede stehenden Art ergeben sich nur beispielsweise aus der US 4,602,687 oder der WO 91/07076. Die in den Boden einzustoßenden Werkzeuge in Gestalt von Zinken sind dabei in Werkzeugträgem gehalten, die beispielsweise mit Hilfe eines Kurbeltriebes im Zuge der Fahrbewegung nach unten gestoßen und wieder nach oben angehoben werden, so daß die Zinken ein Muster beabstandet in dem Boden angeordneter Perforationen erzeugen, durch welche die Belüftung und Befeuchtung des Boden verbessert wird.

Die Werkzeuge, die hier rohrförmig oder aus Vollmaterial auch in unterschiedlichen Dicken auswechselbar an dem oder den Werkzeugträgem gehalten sind, bedürfen angesichts der vorgeschilderten Beanspruchung einer praktisch spielarmen und sicheren Befestigung in diesen, was beispielsweise dadurch sichergestellt wird, daß die Werkzeuge bzw. Zinken mit einem einer konusförmigen Schaftausbildung in entsprechend konisch geformte Öffnungen des oder der Werkzeugträger eingeführt und in dieser Lage durch Verschraubung verspannt werden, so daß die Werkzeuge einen selbsthemmenden Reibschluß in den Trägern erfahren. Um diesen zum Zwecke der Auswechslung von Werkzeugen bzw. Zinken aus der Befestigung in den Werkzeugen bzw. Zinkenträgern zu lösen, genügt es nicht, die bisherige Schraubverbindung zu lockern, der Zinken muß aus dem Klemmsitz befreit werden, wozu man ein sogenanntes Abziehgewinde benötigt, um über eine Kontermutter den konischen Abschnitt des Zinkenschaftes aus dem Gegenkonus des Zinkenträgers herauszuziehen. Diese Ausgestaltung und die damit verbundene Arbeit sind umständlich und lästig.

Der Erfindung liegt die Aufgabe zugrunde, die lösbare und gleichwohl besonders spielarme und feste Verbindung zwischen den Stoßwerkzeugen - Zinken - und den Werkzeugträgem - Zinkenträgern - einfach und raumsparend sowie besonders zuverlässig, schnell und bequem handhabbar zu gestalten.

Diese Aufgabe wird erfindungsgemäß dadurch gelöst, daß das dem Einstoßende abgewandte Gewindeende in ein entsprechendes Gegengewinde einer Gewindemuffe einschraubbar ist, die ihrerseits über eine koaxiale Gewindeverbindung in den Zinkenträger eingreift, derart, daß die durch diese Gewinde bei Drehen der Gewindemuffe auf den Zinken ausgeübte axiale Versetzung größer als die axiale Versetzung der Gewindemuffe gegenüber dem Zinkenträger und/oder zu dieser entgegengerichtet ist.

Die dieser Lehre zugrundeliegende Vorstellung geht dahin, mit einer die Befestigung bzw. das Hineinziehen des Zinken in seine Befestigungslage an den Zinkenträger bewerkstelligenden Schraube zugleich im Zuge des Lösevorganges nicht nur diese Verschraubung zu lockern sondern zugleich auf den Zinken eine Kraft auszuüben, die diesen aus dem konischen Eingriff herausdrückt. Zu diesem Zweck ist die Schraube als zweifach mit Gewinden versehene Schraubmuffe ausgebildet, deren eines dazu dient, den Schraubeingriff zwischen den Zinken und der Gewindemuffe sicherzustellen, während die andere Gewindeverbindung sich zwischen der Gewindemuffe und dem Zinkenträger befindet. Die Gewinde verlaufen koaxial zueinander und sind dem beabsichtigten Zwecke gerechtwerdend grundsätzlich auf zweierlei Weise anzuordnen, nämlich in einem möglichen Ausführungsbeispiel dergestalt, daß der Gewindeeingriff und die Gewindeverbindung gegensinnig gewendelt, d.h. mit entgegengesetzter Steigung verlaufend ausgebildet sind. Beispielsweise kann der Gewindeeingriff zwischen dem Zinken und der Gewindemuffe rechtsgängig ausgebildet sein, während die Gewindeverbindung zwischen der Gewindemuffe und dem Zinkenträger linksgängig ausgebildet wird. Wird auf der Grundlage dieses Beispieles die Gewindemuffe mit Hilfe eines Werkzeuges - Maulschlüssel - nach rechts gedreht, so wird der vorher von Hand bis an den Festlegungssitz im Zinkenträger in die Gewindemuffe eingeschraubte Zinken, der für den Fall einer erforderlichen Drehausrichtung in dieser Lage von Hand oder durch Reibung in der Anfangssituation des Befestigungssitzes gehalten, über den Gewindeeingriff sowohl wie über die Gewindeverbindung axial in den Befestigungssitz gezogen. Diese Befestigungsdrehung verlangt nur einen kurzen Drehweg der Gewindemuffe. Für das Lösen wird die Gewindemuffe umgekehrt nach links gedreht, so daß zum einen der Gewindeeingriff zwischen dieser und dem Zinken den letzteren aus der Gewindemuffe herausdrückt, während sich diese unter derselben Drehbewegung in den Werkzeugträger hineingerichtet verschraubt. Beide Bewegungen addieren sich hinsichtlich des Zinkens, so daß dieser wieder nach kurzem Drehweg aus seiner Halterung an dem Werkzeugträger herausgezwungen wird. Die Reihenschaltung der beiden Gewinde sorgt also dafür, daß der Zinken immer im Formschluß zum Zinkenträger bewegt wird, wenn man die selbsthemmenden Gewinde hinsichtlich ihrer Kraftaufnahme in Achsialrichtung als formschlüssig wirkend ansieht.

Eine andere Möglichkeit der Gewindeanordnung ebenfalls in Hintereinanderschaltung zwischen dem Zinken und dem Zinkenträger über die Gewindemuffe besteht darin, daß der Gewindeeingrift zwischen Zinken und Muffe wie auch die Gewindeverbindung zwischen Muffe und Träger jeweils gleichsinnig, d.h. mit gleichgerichteter Steigung ausgebildet sind, jedoch mit dem Unterschied, daß die Steigung im Bereich der Gewindeverbindung zwischen Gewindemuffe und Zinkenträger kleiner ist als die Steigung im Bereich des Gewindeeingriffes zwischen dem Zinken und der Gewindemuffe. Dann ergibt sich für den Zinken im Zuge der Befestigung wie des Lösens ein größerer axialer Weg als zwischen Gewindemuffe und Zinkenträger, womit wiederum ein sicheres Einziehen des Zinkens in seine Festlegung an dem Werkzeugträger sowie ein sicheres Ausstoßen beim Lösen einfach durch Drehbewegung der Gewindemuffe erreicht wird.

Grundsätzlich kann die Zuordnung nach jeweiligen Gewindepaar aus Bolzengewinde und Muttergewinde hinsichtlich des Gewindeeingriffs zwischen Zinken und Muffe und/oder desjenigen zwischen Muffe und Träger beliebig ausgebildet sein; vorzugsweise wird so gestaltet, wie dies in dem Ausführungsbeispiel beschrieben ist.

Die praktisch spielfreie Befestigung des Zinken an dem Zinkenträger kann grundsätzlich auch durch Anlauf eines Schaftbundes an dem Zinken an einer an dem Zinkenträger ausgebildeten Schulter erfolgen, vorzugsweise wird der Eingriff über Konus und Gegenkonus bevorzugt, wie dies im Zusammenhang mit dem Ausführungsbeispiel ausgeführt ist.

Die Gewindemuffe kann durch Zusammensetzen beispielsweise eines mit Außengewinde versehenen Rohrstückes und koaxial dazu angeschweißter Sechskantmutter gebildet sein, vorzugsweise wird die Gewindemuffe als einstückiges Schraubteil ausgeführt, das für den Angriff eines Drehwerkzeuges, insbesondere Maulschlüssel, zwei parallele Angriffsflächen für diesen, insbesondere in Gestalt einer Vierkantausbildung aufweist.

Die Erfindung wird anhand der in der Zeichnung beispielhaft wiedergegebenen Bauteile und deren Zusammenwirken nachfolgend näher erläutert. Es zeigen:
- Figur 1: einen Abschnitt eines Bodenbearbeitungsgerätes mit einem bruchstückhaft wiedergegebenen Zinkenträger mit einem über eine Verbindungsmuffe mit diesem verbundenen Zinken;
- Figur 2: eine bevorzugte Ausführungsform der Verbindungsmuffe in Längsschnitt und Draufsicht.

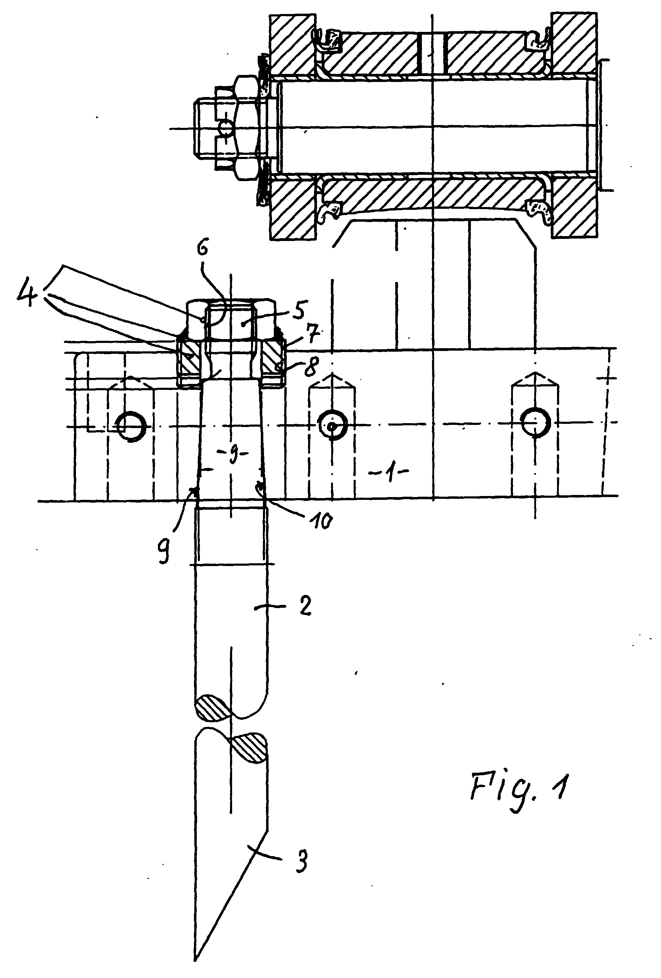

Wie Figur 1 erkennen läßt, ist in den mit 1 angedeuteten Werkzeugträger ein diesen durchgreifender Zinken 2 eingesetzt, der an seinem für das Eindringen in den Boden bestimmten Einstoßende 3 entgegengesetzten Endbereich mit einem Gewindeende 5 in eine Verbindungsmuffe 4 eingeschraubt ist. Das Gewindeende 5 trägt dabei ein Bolzengewinde, welches in ein Muttergewinde 6 der Verbindungsmuffe 4 eingreift. Die Gewindemuffe steht ihrerseits über eine Gewindeverbindung 7, 8 mit dem Zinkenträger 1 derart in Verbindung, daß an der Gewindemuffe 4 für diese Gewindeverbindung ein Bolzengewinde 7 ausgebildet ist, das in ein Muttergewinde 8 in dem Zinkenträger 1 eingedreht ist. Dabei ist der Eingriff zwischen den Gewinden 5 und 6 rechtsgängig gestaltet, während die Verbindung zwischen den Gewinden 7 und 8 linksgängig ausgebildet ist.

Der Zinken 2 wird im Zuge des Befestigungsvorganges in die Gewindemuffe 4 eingedreht, bis sein an das Gewindeende 5 etwa anschließender, sich zum Einstoßende 3 hin erweiternder Konus 9, der koaxial an dem Zinkenschaft ausgebildet ist, an der entsprechend angepaßt in dem Zinkenträger 1 ausgebildeten Wandung der konischen Öffnung 10 angreift. Dieses Eindrehen geschieht von Hand. Danach wird die Gewindemuffe 4 mit Hilfe eines an dieser angreifenden, nicht dargestellten Drehwerkzeuges im Sinne einer Aufdrehbewegung gegenüber dem Zinken 2 gedreht, wodurch dieser über den Gewindeeingriff 5, 6 nach oben gezogen wird, während sich aufgrund des Linksgewindes die Gewindemuffe nach oben aus dem Träger herausverschraubt, weshalb beide dadurch ausgelösten axialen Bewegungskomponenten sich in Richtung der Einziehbewegung des Zinkens in den Träger addieren. Deshalb wird der Zinken bereits über kurzem Drehweg der Muffe im innigen Reibkontakt zwischen den Konen 9 und 10 gezogen und damit am Träger festgelegt. Dabei können die wegen der Rechts- und Linksgestaltung der beiden Gewindeverbindungen gegenläufigen Steigungen gleich oder unterschiedlich sein.

Für das Lösen des Zinken wird die Gewindemuffe links herum gegen Uhrzeigersinn gedreht, so daß sich die Gewindemuffe von dem Gewindeende des Zinken abdrehen möchte, durch ihre Abstützung am Träger daran aber gehindert ist. Sie bewegt sich vielmehr gleichzeitig in den Träger hinein, so daß wiederum beide axialen Versetzbewegungen zwischen den beiden Gewindeverbindungen sich addiert auf dem Zinken in dessen Lösebewegung nach unten übertragen; auch hier wird zwangsläufig und nach kurzen Verdrehen der Gewindemuffe bereits eine Lösung des Zinkens aus seinem Konussitz im Träger erreicht.

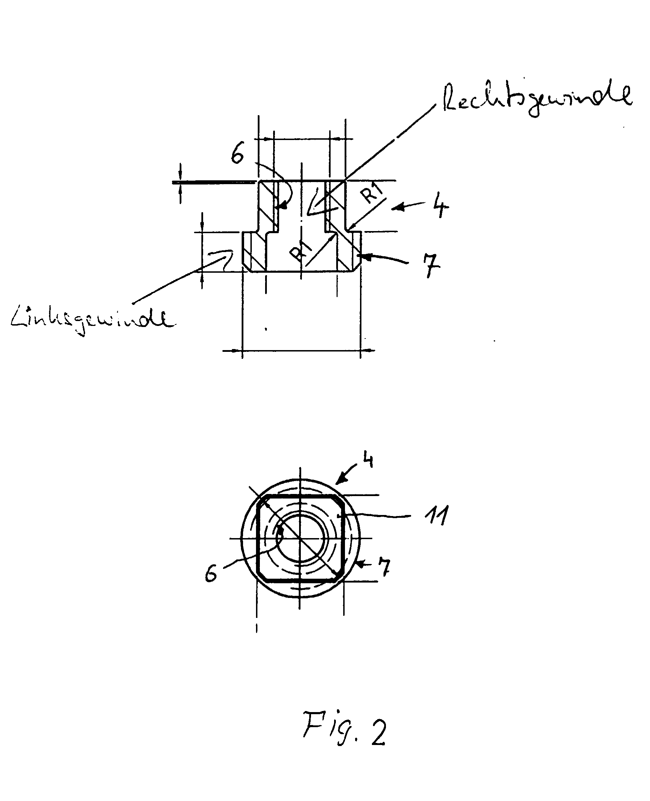

Figur 2 zeigt eine durchgehend einteilige Ausführungsform der Gewindemuffe 4 mit einer Vierkantausbildung 11 für den Angriff eines Drehwerkzeugs, beispielsweise Maulachlüssels. Die Gewindeausbildungen entsprechen demjenigen, wie sie im Zusammenhang mit der etwas anderen aber gleichwirkenden Ausbildung der Gewindemuffe 4 in Figur 1 bereits geschildert wurden.

## Patentansprüche

1. Werkzeughalterung einer Bodenbearbeitungsmaschine für das Einbringen von Öffnungen in den Boden mittels wenigstens eines in den Boden einzustoßenden Zinkens (2), der an seinem der Einstoßrichtung abgewandten Ende in einen Zinkenträger (1) fest verschraubt eingespannt und aus dieser Einspannlage zum Zwecke der Auswechslung lösbar ist,
**dadurch gekennzeichnet,**
daß das dem Einstoßende (3) abgewandte Gewindeende (5) in ein entsprechendes Gegengewinde (6) einer Gewindemuffe (4) einschraubbar ist, die ihrerseits über eine koaxiale Gewindeverbindung (7, 8) in den Zinkenträger (1) eingreift, derart, daß die durch diese Gewinde bei Drehen der Gewindemuffe (4) auf den Zinken (2) ausgeübte axiale Versetzung größer als die axiale Versetzung der Gewindemuffe (4) gegenüber dem Zinkenträger (1) und/oder zu dieser entgegengerichtet ist.

2. Werkzeughalterung nach Anspruch 1,
**dadurch gekennzeichnet,**
daß der Gewindeeingriff zwischen Gewindeende des Zinkens und dem Gegengewinde der Gewindemuffe einerseits und die Gewindeverbindung zwischen der Gewindemuffe und dem Gewindeträger andererseits entgegengesetzte Steigungen (rechts/links) aufweisen.

3. Werkzeughalterung nach Anspruch 2,
**dadurch gekennzeichnet,**
daß das Gewindeende (5) an dem Zinken (2) und das Gegengewinde (6) an der Gewindemuffe (4) als Rechtsgewinde und die Gewindeverbindung (7, 8) zwischen der Gewindemuffe (4) und dem Zinkenträger (1) als Linksgewinde ausgebildet ist.

4. Werkzeughalterung nach Anspruch 1,
**dadurch gekennzeichnet,**
daß der Gewindeeingriff zwischen Gewindeende (5) des Zinkens (2) und dem Gegengewinde (6) der Gewindemuffe (4) einerseits und die Gewindeverbindung (7, 8) zwischen der Gewindemuffe (4) und dem Zinkenträger (1) andererseits gleichgerichtete Steigungen (beide rechts oder beide links) aufweisen, wobei die Steigung der Gewindeverbindung ((7, 8) zwischen der Gewindemuffe (4) und dem Zinkenträger (1) kleiner ist - eine kleinere Ganghöhe aufweist - als die Steigung des Gewindeeingriffs zwischen dem Gewindeende (5) des Zinkens (2) und dem Gegengewinde (6) der Gewindemuffe (4).

5. Werkzeughalterung nach einem der Ansprüche 1 bis 4,
**dadurch gekennzeichnet,**
daß das Gewindeende (5) des Zinkens (2) als Bolzengewinde und das zugeordnete Gegengewinde (6) der Gewindemuffe (4) als Muttergewinde ausgebildet ist.

6. Werkzeughalterung nach einem der Ansprüche 1 bis 5,
**dadurch gekennzeichnet,**
daß die Gewindeverbindung zwischen der Gewindemuffe (4) und dem Zinkenträger (1) aus einem Bolzengewinde (7) der Gewindemuffe (4) und einem Muttergewinde (8) des Zinkenträgers (1) besteht.

7. Werkzeughalterung nach einem der Ansprüche 1 bis 6,
**dadurch gekennzeichnet,**
daß der Zinken (2) in dem Zinkenträger (1) praktisch spielfrei festlegbar ist, insbesondere mittels eines koaxial an dem Zinkenschaft zu dessen Gewindeende (5) hin sich verjüngend ausgebildeten Konus (9), der in eine entsprechend angepaßte konische Öffnung (10) in dem Zinkenträger (1) eingreift.

8. Werkzeughalterung nach einem der Ansprüche 1 bis 7,
**dadurch gekennzeichnet,**
daß die Gewindemuffe (4) ein Flächenpaar, insbesondere in einer Vierkantausbildung (11), für den Angriff eines Maulschlüssels oder dergleichen Drehwerkzeug aufweist.
